# EUROPÄISCHE PATENTSCHRIFT

(11) **EP 0 998 852 B1**
(45) Veröffentlichungstag und Bekanntmachung des Hinweises auf die Patenterteilung: **25.08.2004**
(21) Anmeldenummer: 99111613.8
(22) Anmeldetag: 15.06.1999
(51) Int. Cl.: A01N 65/00, A01N 25/30, A01N 25/04, A01N 25/02

(54) **Mittel zum Schutz von Pflanzen**
Agent for protecting plants
Agent pour protéger les plantes

(30) Priorität: 23.10.1998 DE 19848868
(43) Veröffentlichungstag der Anmeldung: 10.05.2000
(73) Patentinhaber: Immekus, Dieter Dipl.-Ing., 88167 Maierhöfen (DE)
(72) Erfinder: Immekus, Dieter Dipl.-Ing., 88167 Maierhöfen (DE)
(74) Vertreter: Hutzelmann, Gerhard

(56) Entgegenhaltungen:
- EP-A- 0 767 223
- DE-A- 3 816 215
- DE-C- 504 446
- DE-C- 731 362
- DE-U- 29 623 301
- DE-U- 29 800 297
- DE-U- 29 802 237
- DE-U- 29 811 362
- US-A- 5 368 866

## Beschreibung

Die Erfindung bezieht sich auf ein Mittel zum Schutz von Pflanzen gegen Verbiß durch Wild, wobei das Mittel in flüssiger bis pastöser Form vorliegt und durch spritzen, sprühen oder streichen auf die Pflanzen aufbringbar ist und ein Wachs enthält.

Der Erfindung liegt die Aufgabe zugrunde, ein Mittel der genannten Art vorzuschlagen, das gegenüber Verbiß von Pflanzen durch Wildtiere einen wirksamen Schutz gewährt.

Diese Aufgabe wird erfindungsgemäß dadurch gelöst, daß ausschließlich biologisch abbaubare Bestandteile enthalten sind, die nach dem Ablauf der Wirksamkeit abgebaut werden, und daß das Wachs den wirksamen Bestandteil des Mittels bildet und daß als Hauptbestandteil Wasser im Mittel enthalten ist.

Damit ist gewährleistet, daß keinerlei Nebenwirkungen auf die Pflanzen, den Boden und damit andere Pflanzen sowie auch die Wildtiere selbst ausgeübt werden.

Als sehr vorteilhaft hat es sich ergeben, wenn gemäß einer vorteilhaften Ausgestaltung der Erfindung dem Mittel etwa 2 bis 4 % Glycerinmonostearat zugefügt sind.

Das Wachs ist vorallem dafür verantwortlich, daß Verbißschäden verhindert werden.

Dies ist gemäß einer weiteren vorteilhaften Ausgestaltung der Erfindung besonders günstig, wenn als Wachs Wollwachs eingesetzt wird.

Durch die Zugabe von Wachs wird darüber hinaus erreicht, daß das Mittel an der Pflanze sowohl beim Auftragen anhaftet, als auch später durch Regen nicht abgetragen wird.

Als sehr vorteilhaft hat es sich dabei ergeben, wenn gemäß einer weiteren Ausgestaltung der Erfindung etwa 3 bis 8 % Wachsanteil im Mittel enthalten sind.

Eine weitere vorteilhafte Ausgestaltung der Erfindung ist dadurch gekennzeichnet, daß das verwendete Glycerinmonostearat aus Rindertalg gewonnen ist.

Eine ebenfalls sehr vorteilhafte Ausgestaltung der Erfindung liegt darin, daß ein Konservierungsmittel enthalten ist.

Sehr vorteilhaft ist es dabei, wenn gemäß einer weiteren Ausgestaltung der Erfindung der Anteil an Konservierungsmittel bis etwa 1 % beträgt.

Bei einer besonders vorteilhaften Ausgestaltung der Erfindung ist vorgesehen, daß als Konservierungsmittel Paraben eingesetzt ist.

Die Erfindung wird nachfolgend anhand von zwei Ausführungsbeispielen beschrieben.

Beim ersten Ausführungsbeispiel liegt ein flüssiges, versprühbares Mittel zum Schutz von Pflanzen gegen Wildverbiß vor. Aus etwa 15 g Pfeffer-Pulver wird mit Hilfe eines Extrationsmittels ein Extrakt gewonnen, der mit 400 g Wasser, 7,5 g Glycerinmonostearat und 15 g Woll-Wachs vermischt wird. Dieser Emulsion wird noch ein Konservierungsmittel mit einem Anteil von maximal 1 % zugefügt.

Dieses Mittel kann versprüht oder auf die Pflanzen aufgestrichen werden, haftet dort sehr gut und kann auch durch Regen nicht abgewaschen werden. Das Woll-Wachs und der Pfeffer halten Wildtiere davon ab die Pflanzen zu verbeißen.

Beim zweiten Ausführungsbeispiel liegt ein streichfähiges Mittel vor, das gleichermaßen zum Schutz von Pflanzen eingesetzt wird und auf die Pflanzen aufgestrichen werden kann. Der Pfefferextrakt wird hierbei mit 300 g Wasser, 11 g Glycerinmonostearat, 22 g Woll-Wachs und 1 % Konservierungsmittel vermischt.

Dabei ergibt sich eine streichfähige Konsistenz des Mittels, das noch besser gegen Abwaschen durch Regen geschützt ist. Die Wirksamkeit des Mittels gegen Wildverbiß ist mit dem des flüssigen Mittels gleich.

## Patentansprüche

1. Mittel zum Schutz von Pflanzen gegen Verbiß durch Wild, das in flüssiger bis pastöser Form vorliegt und durch spritzen, sprühen oder streichen auf die Pflanzen aufbringbar ist und ein Wachs enthält, **dadurch gekennzeichnet, daß** ausschließlich biologisch abbaubare Bestandteile enthalten sind, die nach dem Ablauf der Wirksamkeit abgebaut werden, und daß das Wachs den wirksamen Bestandteil des Mittels bildet und daß als Hauptbestandteil Wasser im Mittel enthalten ist.

2. Mittel nach Anspruch 1, **dadurch gekennzeichnet, daß** als Wachs Wollwachs eingesetzt ist.

3. Mittel nach Anspruch 1 oder 2, **dadurch gekennzeichnet, daß** etwa 2 bis 4 % Glycerinmonostearat zugefügt sind.

4. Mittel nach einem der vorhergehenden Ansprüche, **dadurch gekennzeichnet, daß** etwa 3 bis 8 % Wachsanteil im Mittel enthalten sind.

5. Mittel nach einem der vorhergehenden Ansprüche, **dadurch gekennzeichnet, daß** das verwendete Glycerinmonostearat aus Rindertalg gewonnen ist.

6. Mittel nach einem der vorhergehenden Ansprüche, **dadurch gekennzeichnet, daß** ein Konservierungsmittel enthalten ist.

7. Mittel nach Anspruch 6, **dadurch gekennzeichnet, daß** der Anteil an Konservierungsmittel bis etwa 1 % beträgt.

8. Mittel nach Anspruch 6 oder 7, **dadurch gekennzeichnet, daß** als Konservierungsmittel Paraben eingesetzt ist.

9. Verwendung eines Mittels nach einem der vorangehenden Ansprüche zum Schützen von Pflanzen gegen Verbiß durch Wild, wobei das Mittel in flüssiger bis pastöser Form vorliegt und durch spritzen, sprühen oder streichen auf die Pflanzen aufbringbar ist und Wachs enthält, das den gegen Verbiß wirksamen Bestandteil des Mittels bildet.

## Claims

1. Agent for protecting plants against animal biting, that is available in a liquid to pasty form, can be applied to the plants by squirting, spraying or coating and contains a wax, wherein all the components are biologically degradable and are degraded once they have stopped being effective, wherein the wax is the active component of the agent and **wherein** the main component of the agent is water.

2. Agent according to claim 1, **wherein** wool wax is the wax used.

3. Agent according to claim 1 or 2, **wherein** about 2 to 4% glycerine monostearate is added.

4. Claim according to one of the previous claims, wherein about 3 to 8% of the agent is accounted for by wax.

5. Agent according to one of the previous claims, wherein the glycerine monostearate used is obtained from beef fat.

6. Agent according to one of the previous claims, wherein a preservative is included.

7. Agent according to claim 6, wherein the proportion accounted for by the preservative is about 1%.

8. Agent according to claim 6 or 7, wherein paraben is used as the preservative.

9. Use of an agent according to one of the previous claims for protecting plants against animal biting, where the agent is available in a liquid to pasty form, can be applied to the plants by squirting, spraying or coating and contains wax that is the component of the agent that acts again biting.

## Revendications

1. Agent pour protéger les plantes contre la morsure par du gibier, se présentant sous forme liquide à pâteuse et pouvant être appliqué sur les plantes par projection, aspersion ou enduction et contenant une cire, **caractérisée en ce que** sont contenus exclusivement des composants dégradables biologiquement, qui sont dégradés après avoir épuisé leur efficacité, et **en ce que** la cire forme le composant actif de l'agent, et **en ce que** de l'eau est contenue dans l'agent, en tant que composant principal.

2. Agent selon la revendication 1, **caractérisé en ce que** l'on utilise comme cire de la cire de laine.

3. Agent selon la revendication 1 ou 2, **caractérisé en ce qu'**on ajoute environ 2 à 4 % de monostéarate de glycérine.

4. Agent selon l'une des revendications précédentes, **caractérisé en ce qu'**une proportion d'environ 3 à 8 % de cire est contenue dans l'agent.

5. Agent selon l'une des revendications précédentes, **caractérisé en ce que** le monostéarate de glycérine utilisé est obtenu à partie de suif de boeuf.

6. Agent selon l'une des revendications précédentes, **caractérisé en ce qu'**un agent de conservation est inclus.

7. Agent selon la revendication 6, **caractérisé en ce que** la proportion en agent de conservation va jusqu'à environ 1 %

8. Agent selon la revendication 6 ou 7, **caractérisé en ce que** l'on utilise comme agent de conservation du parabène.

9. Utilisation d'un agent selon l'une des revendications précédentes pour la protection de végétaux contre la morsure par du gibier, l'agent se présentant sous forme liquide à pâteuse et pouvant être appliqué sur les plantes par projection, aspersion ou enduction et contenant de la cire, formant un composant actif de l'agent contre la morsure.
